# EUROPEAN PATENT APPLICATION

(11) **EP 2 985 852 A1**
(43) Date of publication of application: **17.02.2016**
(21) Application number: 14181049.9
(22) Date of filing: 14.08.2014
(51) Int. Cl.: H02J 7/00, H02J 7/34

(54) **System and method for condition monitoring and controlling a charging level of at least one capacitor**

(71) Applicant: Siemens Aktiengesellschaft, 80333 München (DE)
(72) Inventor: Aarskog, Fredrik Gundersen, 7031 Trondheim (NO)

(57) **Abstract**

It is described a system (1) and a method for controlling a charging level of at least one capacitor (2), comprising a sound wave sensor (4) configured to detect sound signals (3) from the capacitors (2), a sound evaluation unit (5) configured to evaluate the sound signals (3) detected by the sound wave sensor (4), and a control unit (6) configured to control the charging level of the at least one capacitor (2). Thereby the control unit (6) is configured to control the charging level of the at least one capacitor (2) in dependence on the sound signals (3) evaluated by the sound evaluation unit (5) and to reduce the charging level of the capacitors (2) if defined criteria are met in patterns of the sound signals (3).

## Description

### Field of invention

The present invention relates to a system and a corresponding method for condition monitoring and controlling a charging level of at least one capacitor in a subsea environment.

### Background

In deep sea oil or gas production sites, subsea power grids are installed for providing the required electrical power for electrical actuators, for example electric motors and electric pumps. For controlling an electric motor, voltage, current and AC frequency may be varied. To this end, a variable speed drive (VSD) may be provided in the power grid. These variable speed drives contain inter alia DC link capacitors.

All components including the capacitor inside the subsea VSD enclosure will be located in a pressure compensated fluid volume, e.g. a dielectric fluid such as Midel 7131. This means that all the electrical components will be in contact with the dielectric fluid and will be exposed to the same ambient pressure as the water pressure surrounding the variable speed drive. The current design depth of the subsea variable speed drive is 1 to 3000 meters, which gives a surrounding seawater pressure of approximately 1 to 300 bar resulting in a fluid pressure inside the variable speed drive of approximately 1 to 300 bar. Applications at even higher water depths up to 5000 meters are foreseeable.

Since the DC link capacitor will be exposed to the ambient pressure at the seabed, it must be designed to withstand the mechanical stress that is caused by this pressure. The capacitors used for frequency conversion are often implemented as film capacitors, e.g. metalized film capacitors. The film material normally used in such a film capacitor may be polypropylene, but is not limited to this material wherein the thickness can vary between 1 µm and several hundreds of µm. Before the films are wound in many turns, the films, plastic films, are metalized with a thin layer of aluminium or zinc or other metals in order to provide the conductive layer between the dielectric layers.

Due to the prevailing pressure of 300 bar or more, components to be used in subsea applications have to withstand this pressure and have to operate properly under such conditions.

One of the most promising type of capacitors for subsea applications are aluminium metalized film capacitors. Metalized film capacitors have a unique ability to heal itself if an internal breakdown occurs in its dielectric material. When a breakdown occurs between two electrodes at a different voltage potential, an arc will form. A high electric current goes from one electrode to the other. Due to the high current density near the arc, the electrode near the fault will evaporate, the arc will quench, and the faulty area of the capacitor will become insulating. In the following description of the invention such a capacitor is called a self-healing capacitor.

The clearing event is like a tiny explosion, and emits sound. A typical capacitor operated at high voltages in air at an atmospheric pressure emits sounds that are clearly audible for the human ear when self healing occurs.

Overheating and subsequent failure due to local breakdowns is a known fault situation. In some cases, if the energy dissipated during one clearing event is too large, it will lead to excessive local heating in a confined area. When the local temperature increases, the probability of a second breakdown increases. A secondary breakdown may further increase the local temperature, and initiate a third breakdown etc. If the energy dissipated by these breakdowns is higher than the ability to conduct heat away from the fault areas, the local temperature will keep increasing, until the film melts at which point a non-healing failure occurs, and the capacitor must be replaced. Such a thermal runaway may occur over a period from one second to several minutes or hours.

Thus, there is a need for avoiding the excessive local heating and the generation of a cascade of local breakdowns.

### Summary of the invention

This need may be met by the subject matter according to the independent claims. Advantageous embodiments of the present invention are described by the dependent claims.

According to an embodiment of the present invention, a system for controlling at least one capacitor is provided, the system comprising a sound wave sensor configured to detect sound signals from the capacitors. These sound signals may be generated when an internal breakdown in their dielectric material occurs. The internal breakdown is like a small explosion and emits a sound signal which is detectible by the sound wave sensor.

The system further comprises a sound evaluation unit configured to evaluate the sound signals detected by the sound wave sensor, whereby the sound evaluation unit determines those sound signals which occur according to patterns corresponding to the sound signals caused by the internal breakdowns.

Moreover, the system comprises a control unit configured to control a charging level of the at least one capacitor. The control unit is configured to control the charging level of the at least one capacitor in dependence on the sound signals evaluated by the sound evaluation unit.

An advantage of the above-described system, the sound wave sensor easily detects the sound signals of the explosions originated from the capacitors because sound pressure waves travel well in fluids. The sound evaluation unit then analyzes the received sound patterns and is able to perform a detailed investigation of the occurring patterns in the sound spectra because of the high quality of the received signals. Further on, the control unit can then use this information for precisely control the charging level of the capacitors.

According to an embodiment of the present invention, the sound evaluation unit can be configured to generate an output signal based on the detected patterns in the sound signals. The control unit can receive the output signal from the sound evaluation unit and may be configured to control the charging level of the capacitors based on the received output signals.

Furthermore, the sound evaluation unit may be configured to detect those sound patterns in the detected sound signals which are occurring under self healing mechanisms in the at least one capacitor.

This information can then advantageously be used to distinguish sound patterns characteristic of self healing mechanisms from those sound patterns which are typical for other sound sources such as subsea marine life or any kind of sea traffic.

According to an embodiment of the present invention, the control unit can reduce the charging level of the capacitors, when the sound evaluation unit detects that a number of sound patterns per unit of time is larger than a defined threshold.

Self-healing capacitors are likely to fail if a certain frequency rate of self-healing breakdowns is exceeded. In order to monitor and avoid such unwanted failures, a threshold is defined, which indicates that such a destructive failure is imminent to the capacitor.

Moreover, the control unit can allow the at least one capacitor to discharge completely, if the sound evaluation unit detects that a number of sound patterns per unit of time is larger than a defined threshold.

In yet another embodiment of the present invention, the control unit can be configured to disconnect the at least one capacitor from its power supply, if the sound evaluation unit detects that a number of sound patterns per unit of time is larger than a defined threshold.

As an advantage, the capacitor could reduce its charge to zero, allowing a complete recovery of the whole capacitor. Accumulated heat in the capacitor can completely dissipate, and the capacitor can adopt its ambient temperature.

If a non-reversible breakdown occurs, the capacitor being located at a subsea level must be replaced, which can be both time-consuming and expensive. As an advantage of the above-described system, the build-up of a plurality of internal breakdowns mounting to a catastrophic failure can be prevented, for example by temporarily reducing the charging level of the capacitors. This means that expensive and time-consuming work to replace the capacitor can be avoided.

In yet another embodiment, the control unit may reduce the charging level of the capacitors by at least 20% of an initial charging level of the capacitors.

Thereby, the reduced charging level of the capacitors can result in a rate reduction of self-healing breakdowns, allowing the capacitor to dissipate heat and cool down.

Consequently, the risk for a non-reversible breakdown can be reduced substantially. As an advantage, a possible down-time of the VSD can be avoided because a possible failure scenario of the capacitors can be prevented.

The capacitors may be aluminium metalized film capacitors. This type of capacitor has properties which are suitable for applications in a sub-sea environment, for example a unique ability to heal if an internal breakdown occurs in its dielectric material. However any other film capacitor may be used.

According to an embodiment of the present invention, the ambient pressure, under which the capacitors operate, can be between 1 bar and 300 bar. Thus, the operating pressure is for example a pressure prevailing at a depth between 1 m and 3000 m below sea level. In order to obtain a safety margin, the capacitor may be required to withstand pressures higher than the above pressure rating. Accordingly, the target pressure may for example be between 300 bar and 500 bar.

According to an embodiment of the present invention, a method is provided for controlling at least one capacitor, the method comprising detecting sound signals from the capacitors by a sound wave sensor, evaluating the detected sound signals by a sound evaluation unit, and controlling a charging level of the at least one capacitor by a control unit. Thereby the charging level of the at least one capacitor is controlled in dependence on the sound signals evaluated by the sound evaluation unit.

The provided method can for example be advantageously used to estimate a useful lifetime of a film capacitor, since the occurrence rate of self healing breakdowns is proportional to the rate of loss of capacitance.

Furthermore, an output signal can be generated when the sound signals can be evaluated, wherein the output signal can be used for controlling the charging level of the capacitors.

According to an embodiment of the present invention, an occurrence of sound patterns in the sound signals are evaluated by the sound evaluation unit, which are occurring under self healing mechanisms in the at least one capacitor.

These sound patterns can be used to find characteristic sounds of interest with respect to self-healing breakdowns and distinguish them from other sounds occurring in a sub-sea environment.

Additionally, the charging level of the at least one capacitor can be controlled depending on the occurrence rate of the detected sound patterns which correspond to self-healing mechanisms.

Moreover, the charging level of the capacitors may be reduced when it is detected that the number of sound patterns per time unit is larger than a defined threshold.

By reducing the charging level of the capacitors, a non-healing breakdown or an irreversible failure of the capacitors can be avoided because a reduction of the charging level corresponds to a reduction in the applied voltage to capacitors, decreasing the rate of self-healing failures.

According to an embodiment of the invention, an initial charging level of the capacitors can be applied when the occurrence rate of sound patterns per time unit is equal or lower than the defined threshold.

An advantage of the proposed method is that the current condition of the capacitor can be permanently monitored. This means, that it can be used as an early warning signal before a film capacitor is about to fail. If the charging level of the capacitor is reduced, it can cool down. Once it is cooled down, it can regain its normal voltage withstand capabilities and can be operated like normal. This step may be sufficient to avoid a permanent failure of the film capacitor.

The provided method does not require any electrical contact with the capacitor system to be monitored. Therefore it has the advantage that it can be made completely separate with the capacitor bank or the VSD and it will not affect reliability of the system to be monitored in any way.

It has to be noted that embodiments of the invention have been described with reference to different subject matters. In particular, some embodiments have been described with reference to system type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the system type claims and features of the method type claims is considered as to be disclosed with this document.

It should be understood that features individually or in any combination disclosed, described, employed or provided for a method for controlling a charging level of a capacitor may also individually or in any combination applied, used for or employed for an system for controlling a charging level of a capacitor according to an embodiment of the present invention and vice versa.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 is a schematic view on a system for controlling a charging level of at least one capacitor using sound emitted by internal breakdowns in the capacitors.
Fig. 2 shows a method including steps for controlling a charging level of at least one capacitor using sound emitted by internal breakdowns in the capacitors.
Fig. 3 shows another embodiment of the method illustrated in Fig. 2.

### Detailed description

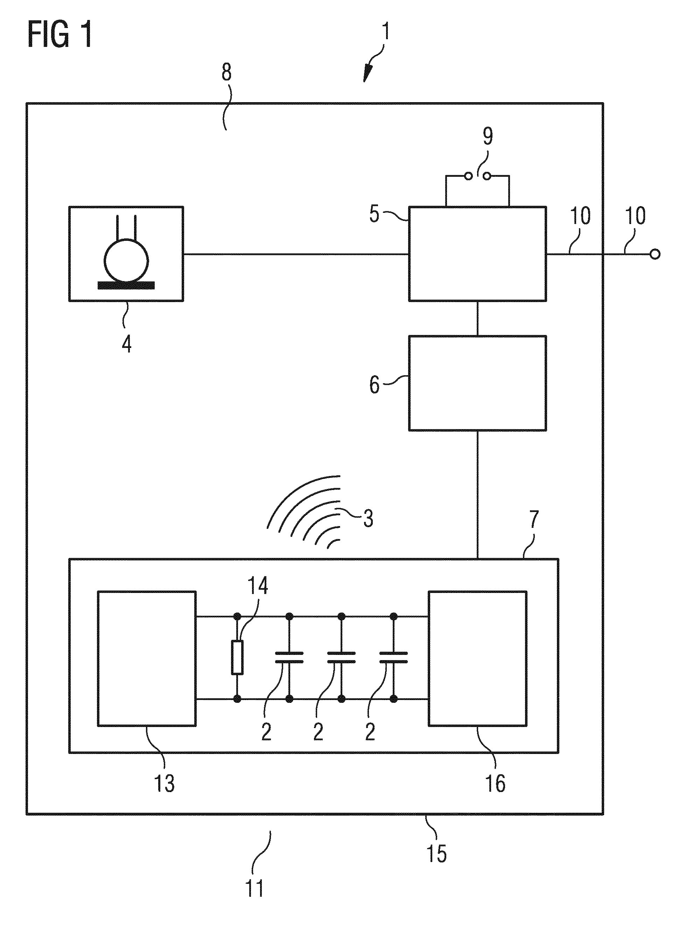

Figure 1 shows a system 1 in a Midel fluid 8 which surrounds at least one capacitor 2. In the illustrated embodiment the capacitors 2 are self-healing capacitors located in a VSD (variable speed drive) 7. In a preferred embodiment of the present invention the system 1 can be a VSD enclosure 15. The VSD 7 including the capacitors 2 are exposed to the ambient pressure of the Midel fluid 8. In a preferred embodiment the Midel fluid 8 can be exposed to the ambient pressure of the system 1.

The system 1 can be located in a subsea environment and may therefore be exposed to water 11 under a certain pressure, for example between 1 and 300 bar. The Midel fluid 8 in the system 1 comprises a pressure compensator 12 which allows to the system 1 to be exposed to the ambient pressure and operate under the same pressure as the surrounding water 11.

The system 1 further comprises a sound wave sensor 4 which is adapted to detect sound signals 3 emitted by the capacitors 2. Thereby the Midel fluid 8 serves as a medium to carry the sound signals 3 which can be caused by internal or self-healing breakdowns.

The sound wave sensor 4 contains a microphone, which can sense sound waves in fluids. Even in an air environment, the self-healing breakdowns are like little explosions and are clearly audible to the human ear. Since the sound pressure waves travel easily in fluids, it is conceivable to create an acoustic sensor. In a preferred embodiment, the sound wave sensor 4 can be a hydrophone, which is designed to be used underwater for receiving underwater sound, taking into consideration the particular requirements of an operation in fluids under pressure. Hydrophones can be based on a piezoelectric transducer that generates electricity when subjected to a pressure change. Such piezoelectric materials, or transducers, can convert a sound signal into an electrical signal because a sound signal is a pressure wave.

In a preferred embodiment of the present invention, the sound signals 3 of the capacitors 2 can be generated due to explosions caused by self-healing breakdowns in the capacitors 2. In a further embodiment, two or more sound wave sensors 4 can be used at different locations in the system 1. The exact position of the sound wave sensors 4 within the system 1 can be chosen such that the 3-dimensional location of the origin of the sound can be determined. In such an arrangement, it may be possible to determine which of the capacitors 2 emits a particular sound wave 3.

The sound wave sensor 4 is connected to a sound evaluation unit 5 which can receive information collected by the sound wave sensor 4. The sound evaluation unit 5 is capable of analyzing the sound signals 3. Thereby sound patterns can be identified, which show a particular characteristic belonging to self-healing breakdowns of the capacitors. The sound evaluation unit 5 is capable of analyzing sound spectra of single explosions as well as characteristic sequences of a plurality of sound signals 3.

The sound evaluation unit 5 can be connected to a control unit 6, which receives the information evaluated in the sound evaluation unit 5. Furthermore, the control unit 6 can be connected directly or indirectly to the capacitors 2 in the VSD. It can either be a separate device as illustrated in Fig. 1 or it can be a VSD control unit which is situated in the VSD.

If the sound evaluation unit 5 identifies sound patterns which indicate that a catastrophic, non-healing breakdown or irreversible damage is imminent to the capacitors 2, the control unit 6 can reduce the charging level of the capacitors 2. This may lead to a rate reduction of self-healing breakdowns and a decrease in the operating temperature of the capacitors 2 before a catastrophic breakdown can occur.

In one embodiment of the current invention, the sound evaluation unit 5 can make a decision to reduce the charging level of the capacitors 2 based on the evaluated sound patterns and forward this information to the control unit 6 which can then reduce the charging level. In another embodiment, the control unit can decide to reduce the charging level of the capacitors 2 based on the sound patterns evaluated in the sound evaluation unit 5.

The sound evaluation unit 5 is configured to emit a signal if the number of sound patterns per time unit is larger than a defined threshold. The control unit can then receive the signal and use it for further processing.

The system as illustrated in Fig. 1 can also be used to monitor the condition of the capacitors, whereby the occurrence rate of particular sound patterns is continuously observed and the condition of the capacitors with regard to their functional status is recorded by an external monitoring- or controlling means which can be connected with a communication interface 10.

In the illustrated embodiment in Fig. 1 the evaluation unit is connected to the communication interface 10, where the external monitoring- or controlling means can be connected and the functional status and the condition of the capacitors be monitored. Moreover, the sound evaluation unit 5 can receive power from any power supply 9 and it does not need to be electrically connected to the capacitor to be monitored. This power supply 9 can be a part of the VSD or any other external power supply. A capacitor power supply 13 including inter alia a diode rectifier is connected to the capacitors 2, supplying them with operating voltage. In one embodiment the VSD 7 may also be a converter unit. Furthermore, a power output 16, e.g. an H-bridge inverter, is provided.

Furthermore, the control unit 6 may disconnect the capacitor power supply 13 electrically, such that the capacitor 2 is allowed to discharge naturally, for example through a discharge resistor 14. The discharge resistor 14 is connected in parallel with the capacitor(s) 2. The capacitor 2 may then remain disconnected and cool down for a predefined waiting time interval, that may for example depend on the capacitor size and the ambient temperature. After this time interval the capacitor 2 can be reconnected and it may return to normal operating function.

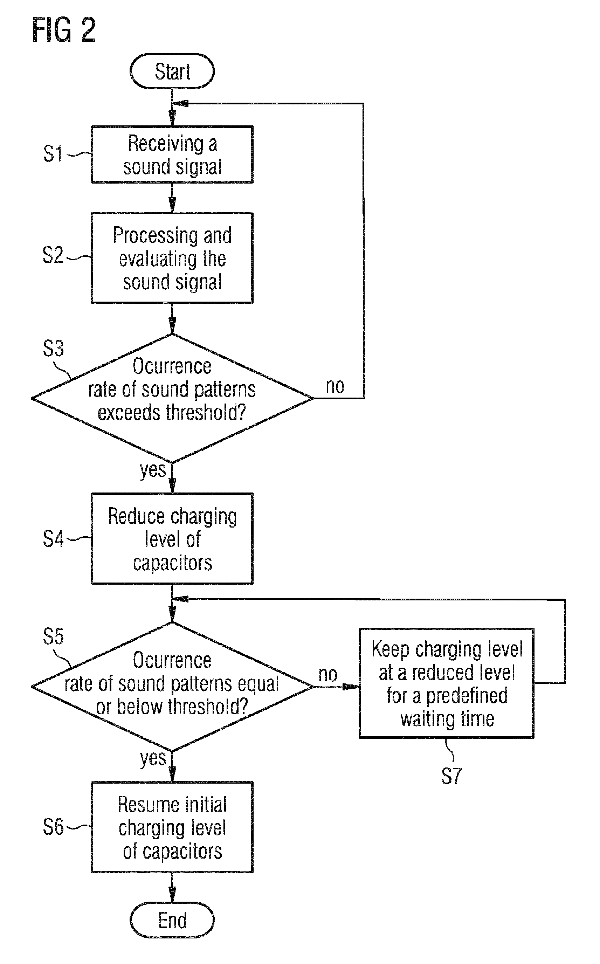

Fig. 2 shows a method for controlling a charging level of at least one capacitor using sound emitted by internal breakdowns, for example self-healing breakdowns, in the capacitors.

In a first step S1 a sound signal is being received by the sound wave sensor. In a preferred embodiment of the invention, the sound signal may be emitted by the capacitors located in the VSD. The cause for the sound signal may be an explosion due to a self-healing breakdown in the capacitors.

In a next step S2, the sound signal is being processed and evaluated by the sound evaluation unit, whereby particular sound patterns characteristic for sound signals originated from self-healing breakdowns may be identified.

In a further step S3, the method determines if the occurrence rate of particular sound patterns identified in step S2 exceeds a certain threshold. The threshold specifies a certain number of sound patterns within a given time unit, which indicate that the number of self healing breakdowns may amount to a magnitude where a catastrophic failure or a non-healing breakdown is imminent. If the threshold is not exceeded, the method resumes at step S1 and continues from there as described above.

If the threshold is reached or exceeded, the charging level of the capacitors is being reduced in a step S4. The objective of this step is to reduce a voltage applied to the capacitors, therefore reducing the number of self-healing breakdowns and the temperature in the capacitors. In another embodiment of the current invention, the capacitor power supply can be disconnected from the capacitors or the capacitors can be allowed to discharge completely. With this step, the heat in the capacitors can be dissipated, allowing the material of the capacitors to cool down.

In a step S5 the method checks if the occurrence rate of particular sound patterns per unit of time characteristic for self-healing breakdowns has been reduced after reducing the charging level of the capacitors. During this step the method checks, if the occurrence rate of particular sound patterns per unit of time is equal or below the given threshold.

If the occurrence rate of particular sound patterns per unit of time is equal or below the given threshold as determined in the step S5, an initial charging level of the capacitors is resumed in a step S6.

If the occurrence rate of particular sound patterns per unit of time remains above the given threshold, the charging level of the capacitors is being kept at the reduced level in a step S7 for a predefined waiting time. In one embodiment the charging level may be even further reduced. Then the method goes back to step S5 and continues from there as described above.

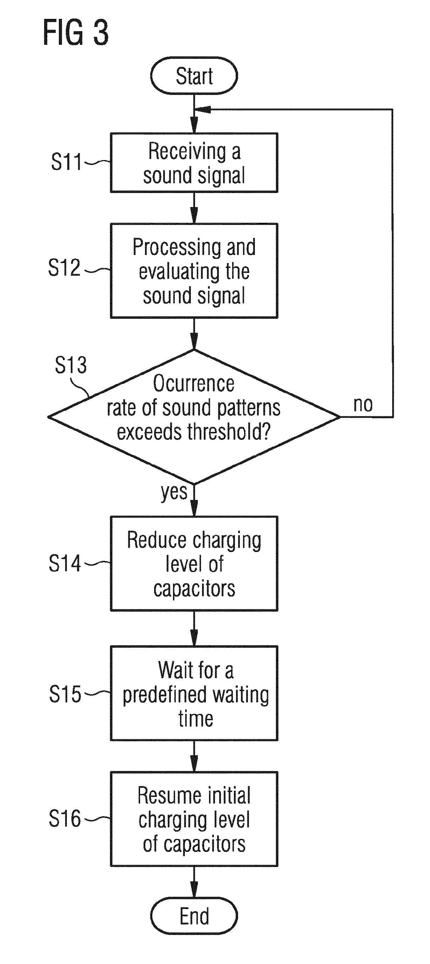

Fig 3 shows another embodiment of the method illustrated in Fig. 2, whereby steps S11 to S14 correspond to the steps S1 to S4 in Fig. 2.

In a step S15, the method waits for the predefined waiting time. The predefined waiting time may be chosen according to the properties of the capacitors. This step has the objective to cool the capacitor down while the charging level is kept a reduced rate. In an embodiment of the current invention, the capacitors can also be discharged completely or the power supply of the capacitors can be disconnected and the capacitors be discharged by means of a discharge resistor.

If the predefined waiting time is chosen accordingly, step S15 can advantageously cool down the capacitor, therefore reduce the number of self-healing breakdowns and allow the heat to dissipate.

In a next step S16, the initial charging level of the at least one capacitor is resumed, after the predefined waiting time has elapsed.

With that step, the capacitors can resume their standard functionalities and allow a normal, fault-free operation of the VSD.

The inventor found that catastrophic, non-healing failures or non-reversible breakdowns of capacitors in subsea environments often arise because several self-healing breakdowns occur in a short time, causing a sudden, locally confined heating of the capacitor to a level, where heat dissipation cannot transport sufficient heat way from the location of the breakdown. This can then give rise to a melt-down of material at and/or near the location of the breakdown, causing the catastrophic failure and a subsequent irreversible destruction of the capacitor.

It is also known that the energy dissipated in one clearing event is highly dependent on the capacitor voltage. If the initial breakdown could be detected, it is believed that a thermal runaway can be inhibited and a failure can be avoided.

## Claims

1. A system (1) for controlling a charging level of at least one capacitor (2), comprising:
- a sound wave sensor (4) configured to detect sound signals from (3) the at least one capacitor (2),
- a sound evaluation unit (5) configured to evaluate the sound signals (3) detected by the sound wave sensor (4),
- a control unit (6) configured to control a charging level of the at least one capacitor (2),
wherein the control unit (6) is configured to
control the charging level of the at least one capacitor (2) in dependence on the sound signals (3) evaluated by the sound evaluation unit (5).

2. The system (1) according to claim 1, wherein
the sound evaluation unit (5) is configured to generate an output signal based on the detected sound signals (3) wherein the control unit (6) receives the output signal and is configured to control the charging level of the at least one capacitor (2) based on the received output signal.

3. The system (1) according to claims 1 and 2, wherein
the sound evaluation unit (5) is configured to detect an occurrence of sound patterns in the detected sound signals (3) which are occurring under self healing mechanisms in the at least one capacitor (2).

4. The system (1) according to claim 3, wherein, when
the sound evaluation unit (5) detects that a number of sound patterns per unit of time is larger than a defined threshold, the control unit (6) reduces the charging level of the at least one capacitor (2).

5. The system (1) according to claim 3, wherein, when
the sound evaluation unit (5) detects that a number of sound patterns per unit of time is larger than a defined threshold, the control unit (6) allows the at least one capacitor (2) to discharge completely.

6. The system (1) according to claim 3, wherein, when
the sound evaluation unit (5) detects that a number of sound patterns per unit of time is larger than a defined threshold, the control unit (6) is configured to disconnect the at least one capacitor (2) from its power supply.

7. The system (1) according to claim 4, wherein
the control unit (6) reduces the charging level of the at least one capacitor (2) by at least 20% of an initial charging level of the at least one capacitor (2).

8. The system (1) according to any of the preceding claims, wherein
the at least one capacitor (2) is an aluminium metalized film capacitor.

9. The system (1) according to any of the preceding claims, wherein
the system (1) operates at an ambient pressure of 1 to 300 bar.

10. A method for controlling a at least one capacitor, comprising:
- detecting sound signals from the at least one capacitor by a sound wave sensor,
- evaluating the detected sound signals by a sound evaluation unit,
- controlling a charging level of the at least one capacitor by a control unit,
wherein the charging level of the at least one capacitor is controlled in dependence on the evaluated sound signals evaluated by the sound evaluation unit.

11. The method according to claim 8, wherein
an output signal is generated by the sound evaluation unit when the sound signals are evaluated, wherein the output signal is used by the control unit for controlling the charging level of the at least one capacitor.

12. The method according to claim 8, wherein
an occurrence of sound patterns in the evaluated sound signals occurring under self healing mechanisms in the at least one capacitor is evaluated by the sound evaluation unit.

13. The method according to claim 10, wherein
the charging level of the at least one capacitor is controlled depending on the occurrence rate of the detected sound patterns which correspond to self-healing mechanisms.

14. The method according to claims 10 or 11, wherein
when it is detected that the number of sound patterns per time unit is larger than a defined threshold, the charging level of the at least one capacitor is reduced.

15. The method according to claim 13, wherein
when it is detected that a number of sound patterns per unit of time is larger than a defined threshold, the at least one capacitor is discharged completely by the control unit.

16. The method according to claim 13, wherein, when
when it is detected that a number of sound patterns per unit of time is larger than a defined threshold, the at least one capacitor is disconnected from its power supply by the control unit.

17. The method according to claims 10, 11 or 12, wherein
an initial charging level of the at least one capacitor is applied when the occurrence rate of sound patterns per time unit is equal or lower than the defined threshold.

18. A subsea variable speed drive comprising at least one system as claimed in any of claims 1 to 9.
